Europäisches Patentamt

European Patent Office

Office européen des brevets

(11) Publication number: **0 037 129**
**B1**

(12) **EUROPEAN PATENT SPECIFICATION**

(45) Date of publication of patent specification: **08.05.85**

(51) Int. Cl.⁴: **G 02 B 6/04**

(21) Application number: **81200192.3**

(22) Date of filing: **19.02.81**

(54) Optical telecommunication element.

(30) Priority: **28.03.80 NL 8001832**

(43) Date of publication of application:
**07.10.81 Bulletin 81/40**

(45) Publication of the grant of the patent:
**08.05.85 Bulletin 85/19**

(84) Designated Contracting States:
**AT BE DE FR GB IT NL SE**

(56) References cited:
**DE-A-2 723 659**
**DE-A-2 824 634**
**FR-A-2 424 612**
**US-A-4 169 657**

(73) Proprietor: **N.V. Philips' Gloeilampenfabrieken**
**Groenewoudseweg 1**
**NL-5621 BA Eindhoven (NL)**

(72) Inventor: **Van Der Hoek, Willem**
**c/o INT. OCTROOIBUREAU B.V. Prof. Holstlaan 6**
**NL-5656 AA Eindhoven (NL)**

(74) Representative: **Weening, Cornelis et al**
**INTERNATIONAAL OCTROOIBUREAU B.V. Prof.**
**Holstlaan 6**
**NL-5656 AA Eindhoven (NL)**

Courier Press, Leamington Spa, England.

# Description

The invention relates to an optical telecommunication element comprising a cylindrical sheath and within the sheath an optical fibre fixed at periodic intervals on the inner wall of the sheath, wherein between the points of fixation, the fibre freely extends inside the cylindrical sheath.

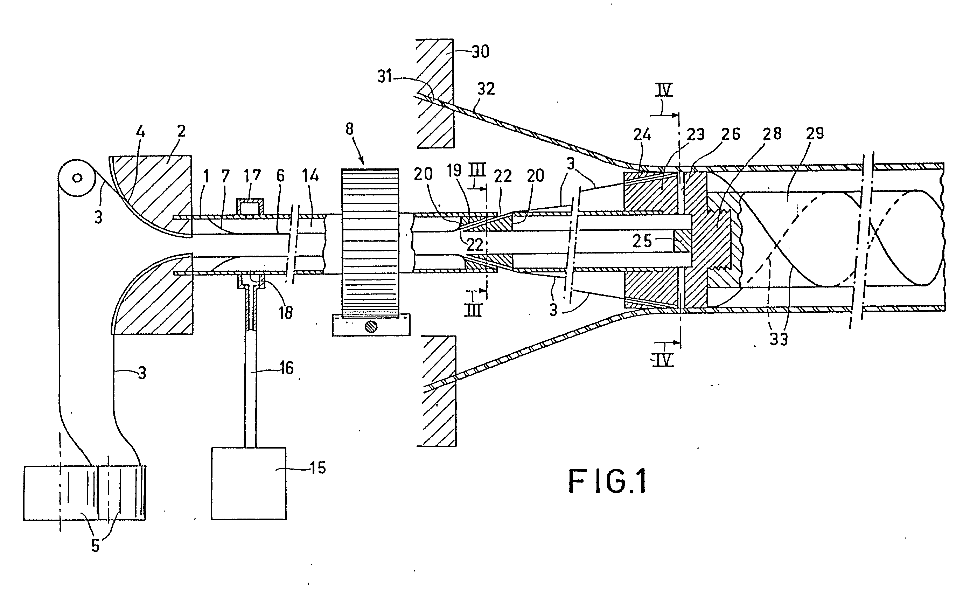

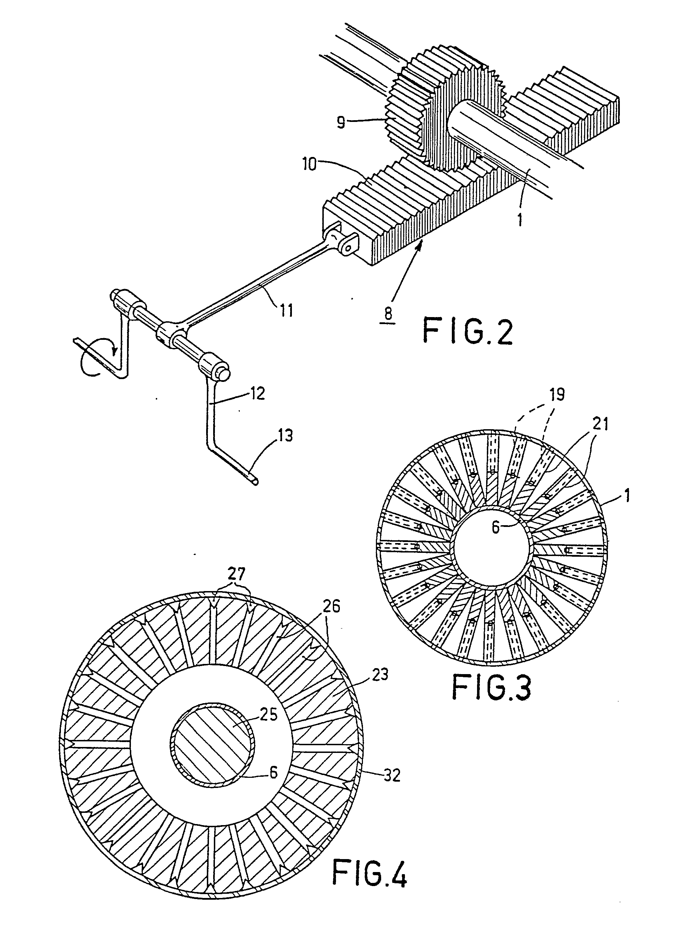

Such an element is disclosed in US—A—4,039,248. In the known element one optical fibre is used which extends sinusoidally or substantially sinusoidally inside the sheath (Figs. 3—6). The optical fibre may be situated in one plane but may also be oriented in several successive flat planes which enclose an acute angle (Fig. 1b of US—A—4,039,248). The amplitude of the sinusoidal optical fibre corresponds to the inside diameter of the sheath. By using a sheath whose inner surface comprises internal protrusions or by using discs provided in the sheath the optical fibre is fixed inside the sheath.

The optical fibre has a much smaller coefficient of expansion than the sheath of synthetic resin. In the case of temperature variations, a compressive force or tensile (pulling) force will be exerted on the fibre so that at the locations where the fibre is fixed against the wall, variation in the radius of curvature and micro-bends will occur. This results in that very considerable signal losses occur and there is also a fair chance that the fibre may develop micro-cracks and finally break.

The known element has the additional disadvantage in that the positioning and in particular, the fixing of the fibre inside the sheath is rather complicated. The manufacturing process can easily give rise to errors so that this process is rather critical and consequently is expensive.

It is the object of the invention to provide an optical telecommunication element which mitigates the above mentioned disadvantages. According to the present invention this is achieved with an optical telecommunication element of the kind mentioned in the opening paragraph which is characterized in that the means of fixation are glue-joints, that between the points of fixation the fibre extends in the form of a helix or a quasi-helix and that at the points of fixation the direction of the pitch of the helix or quasi-helix is reversed.

Since the optical fibre is fixed on the sheath at the points of reversal of the direction of the pitch, the optical fibre, in the case of expansion or shrinkage of the sheath, will not show any variation in radius of curvature, micro-bends or a movement in the axial or tangential direction in said places of fixture. As a result of this the above mentioned disadvantages of the known device are substantially avoided. The amplitude of the helical or quasi-helical optical fibre is preferably smaller than the inside diameter of the sheath so that no friction occurs between fibre and sheath.

As a rule the optical fibre will have the shape of a quasi-helix. By the expression "quasi-helix" a configuration is meant which differs from an actual helix which has a constant radius and pitch angle; whereas a quasi-helix has a configuration in which the radius and the pitch angle may vary continuously. In projection a helix shows a circular shape whereas the projected quasi-helix is pear-shaped.

Preferably a helical optical fibre is used which after a rotation over at most 360° varies its direction of pitch periodically. Herewith process-technical advantages are achieved because, for example, a fixed position of the storage reels for the optical fibres is possible, which simplifies the manufacturing process considerably. More specifically, after a rotation over 270°—330° the pitch is changed from a left-hand pitch to a right-hand pitch, or conversely. By using this measure an optical telecommunication element is obtained which can very readily withstand external forces, in particular bending forces.

In a favourable embodiment, several helical optical fibres are used which fibres are spaced apart from each other over a small distance in the tangential direction. The advantages of the use of several optical fibres are evident. The number of fibres is not restricted to narrow limits and may be chosen at will in accordance with the field of application of the element provided there is sufficient space for the fibres inside the sheath. Of course more space can be realised by increasing the diameter of the sheath.

It should be recognized that from DE—A—27.23.659 an optical cable is known, comprising several optical telecommunication elements, each element having an optical fibre within a loose coating. The said elements are twisted together with a periodically reversed twist, within a closely fitting outer mantle. The outer mantle contacts all the parallel extending elements over their entire length. Due to the friction between the outer mantle and the loose coating of the elements, the reversed twist is maintained. Contrary to the present invention the said German Offenlegungsschrift does not teach or suggest any specific configuration of the optical fibre inside the loose coating. Moreover the construction according to the said Offenlegungsschrift does not show optical fibres extending freely between points of fixation.

The invention also relates to a method of manufacturing a telecommunication element as described above which is characterized in that while a thin-walled cylindrical sheath is extruded, one or several optical fibres are continuously fed into the extruded sheath, the optical fibre(s) experiencing a composite movement which is built up from a movement in the longitudinal direction of the sheath and a rotational movement with a periodical reversal of the direction of rotation and a quantity of glue is introduced periodically into the sheath, the optical fibre(s) being fixed on the inner wall of the sheath by means of the glue at the locations where a reversal of the rotational movement takes place.

The invention further relates to a device for carrying out the above method which is characterized in that the device comprises an extrusion head having a circumferential slot-shaped aperture communicating with a reservoir for dosing an extrudable material, as well as a central aperture, a hollow shaft extending through the central aperture and connected to means which give the hollow shaft a rotational movement with a periodic reversal of the direction of rotation, a concentric tube within the hollow shaft and input and output apertures in the hollow shaft and tube for leading through one or several optical fibre(s) and communicating with a dosing device for dispensing glue.

In a favourable embodiment of the device the end of the hollow shaft situated on the side of the output apertures comprises a cylindrical cam which has guiding grooves for the optical fibres on its outer surface and which furthermore has internal radially extending ducts which are connected at one end to the tube within the hollow shaft and at the other end open into apertures which are provided in the outer surface of the cam.

The invention will be described in greater detail with reference to the drawings, in which

Fig. 1 is a cross-sectional view of a device for the manufacture of the optical telecommunication element,

Fig. 2 is a perspective view of the driving mechanism of the device shown in Fig. 1,

Fig. 3 is a sectional view taken on the line III—III of Fig. 1,

Fig. 4 is a sectional view taken on the line IV—IV of Fig. 1,

Fig. 5 is a cross-sectional view of a telecommunication element comprising several optical fibres, and

Fig. 6 is a perspective view of an optical fibre in an optical telecommunication element.

Reference numeral 1 in Fig. 1 denotes a hollow shaft which is preferably manufactured from metal and which comprises at one end an input member 2 for a bundle of optical fibres 3. The optical fibres 3 enter the hollow shaft 1 *via* grooves 4 which are regularly divided over the conical surface of input member 2. The number of optical fibres 3 is not restricted to narrow limits and may be, for example, from 5 to 300 stands. Each optical fibre originates from a storage reel 5. Hollow shaft 1 comprises internally a concentric tube which is preferably also manufactured from metal and which is connected to shaft 1 near the input member 2 by means of a conical end face 7.

The assembly of shaft 1 and tube 6 is rotated by means of a driving mechanism 8, the rotational movement varying its direction of rotation periodically. For this purpose the driving mechanism 8, as shown diagrammatically in Fig. 2, comprises a toothed wheel 9 which is connected on hollow shaft 1, engages a toothed rack 10 and is connected to crank 12 of crankshaft 13 *via* a driving rod 11 connected to toothed rack 10. Upon rotation of crankshaft 13 a rotational movement varying its direction periodically is imparted to toothed wheel 9.

In the annular space 14 situated between the shaft 1 and the tube 6 glue is introduced periodically from a glue reservoir 15 which communicates with the internal space 14 *via* inlet duct 16, rotation seal 17 and apertures 18 provided in shaft.

1. The optical fibres 3 extending inside the tube 6 are guided to the outer surface of shaft 1 via leadthrough chambers 19 extending between the shaft 1 and the tube 6. The leadthrough chambers which are shown in the cross-sectional view of Fig. 3 are formed by partitions 20 which are situated in parallel planes at right angles to the shaft 1 and are connected by a number of longitudinal discs 21 (Fig. 3). The upper and lower sides of chambers 19 are formed by parts of shaft 1 and tube 6, respectively, and each have an aperture 22.

The optical fibres 3 guided outside the shaft 1 then pass over a comb 23 provided at the end of shaft 1. At its outer surface comb 23 comprises guide grooves 24 and comprises a central stopper 25 which closes the tube 6. Comb 23 furthermore comprises radial ducts 26 which communicate at one end with annular space 14 and at the other end open into apertures 27 as shown in Fig. 4 provided in the cylindrical outer surface of comb 23 (Fig. 4). On its part remote from the stopper 25 the comb 23 has a screwthreaded connection part 28 which is connected to a supporting pin 29. The diameter of supporting pin 29 is slightly smaller than that of comb 23. By means of an extruder "30" which has a circumferential slot-shaped aperture 31 a sheath 32 of synthetic resin is extruded over the cylindrical outer surface of comb 23.

The optical fibres 3 passing over the reciprocating comb 23 will cover a helical path with an alternate left-hand and right-hand pitch. Each time when the direction of rotation of the comb varies, glue is dosed in a small quantity *via* ducts 26. As a result of this the optical fibres will be fixed on the inner surface of sheath 32 at the point of pitch reversal of the helical path. The sheath 32 can be deformed plastically by axial tensile load, the thickness of the sheath becoming slightly less. The amplitude of the optical fibres decreases and becomes smaller than the diameter of the sheath 32. With the exception of the adhesion points the fibres will have no contact with the inner wall of sheath 32. The fibres, after the spotwise adhesion to sheath 32, are temporarily supported by pin 29. The broken line of numeral 33 as shown in Figure 1 indicated the path that the relevant optical fibre is situated behind pin 29. The optical fibres, after passage of supporting pin 29, will show a quasi-helical variation with a pear shaped projection instead of a circular projection, as a result of their own weight and the torques fixed in the adhesion points.

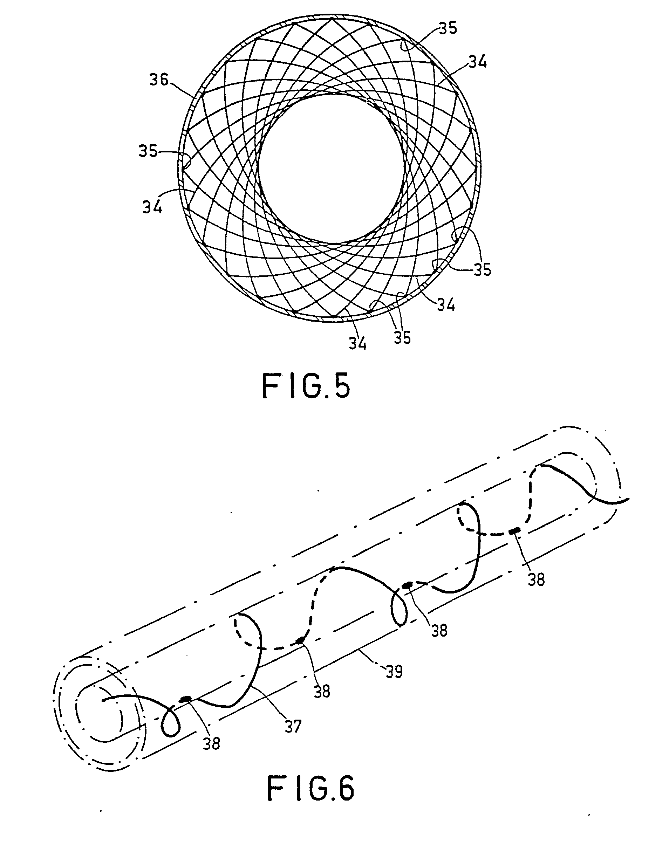

Fig. 5 is a cross-sectional view of an optical telecommunication element obtained in the above manner. Reference numeral 34 denote twelve quasi-helical optical fibres in said element. Each optical fibre is fixed periodically on the inner wall of sheath 36 of synthetic resin, in this case after each helix, by means of glue 35.

The adhesion points are also the points of reversal of the direction of the pitch of each optical fibre. The adhesion points are situated in one plane which is at right angles to sheath 36 and are moved relative to each other in the tangential direction. The quasi-helical configuration of each optical fibre in which the pitch angle and the amplitude vary continuously, gives a pear shaped projection which is clearly visible from the Figure. The maximum amplitude of the optical fibres is smaller than the diameter of the sheath.

Fig. 6 is a perspective view of a quasi-helical configuration with an alternate left-hand and right-hand pitch of one optical fibre. The optical fibre 37 is fixed on the wall of the sheath 39 of synthetic resin at the points of reversal 38.

**Claims**

1. An optical telecommunication element comprising a cylindrical sheath (36) and within the sheath an optical fibre (34) fixed at periodic intervals on the inner wall of the sheath, wherein between the points of fixation (38), the fibre freely extends inside the cylindrical sheath, characterized in that the means of fixation are glue-joints (35), that between the points of fixation the fibre extends in the form of a helix or a quasi-helix and that at the points of fixation the direction of the pitch of the helix or quasi-helix is reversed.

2. An optical telecommunication element as claimed in Claim 1, wherein inside the cylindrical sheath (36) a number of helical optical fibres (34) is applied, which are spaced apart from each other over a small distance in tangential direction.

3. A method of manufacturing an optical telecommunication element as claimed in Claim 1, characterized in that while a thin-walled cylindrical sheath is extruded, one or several optical fibres are fed continuously into the extruded sheath, the optical fibre(s) experiencing a composite movement which is built up from a movement in the longitudinal direction of the sheath and a rotational movement with a periodic reversal of the direction of rotation, and a quantity of glue is introduced periodically in the sheath, the optical fibre(s) being fixed on the inner wall of the sheath by means of the glue at the locations where a reversal of the rotational movement takes place.

4. A device for carrying out the method as claimed in Claim 3, characterized in that the device comprises an extrusion head (30) which has a circumferential slot-shaped aperture (31) communicating with a reservoir for dosing an extrudable material, as well as a central aperture, a hollow shaft (1) which extends through the central aperture and is connected to means (8) which give the hollow shaft a rotational movement with a periodic reversal of the direction of rotation, a concentric tube (6) within the hollow shaft, input (18) and output (22, 26) apertures in the hollow shaft and tube for leading through one or several optical fibre(s) (3) and communicating with a dosing device (15) for dispensing glue.

5. A device as claimed in Claim 4, characterized in that the end of the hollow shaft (1) situated on the side of the outlet apertures (26) comprises a cylindrical cam (23) which at its outer surface has guiding grooves (24) for the optical fibres (3) and which furthermore has internal radially extending ducts (26) which are connected at one end to the tube (6) within the hollow shaft (1) and at the other end open into apertures (27) which are provided in the outer surface of the cam.

**Revendications**

1. Elément de télécommunication optique comportant une gaine cylindrique (36), dans laquelle est fixée une fibre optique (34) à desintervalles réguliers sur la paroi intérieure de la gaine, alors qu'entre les points de fixation (38), la fibre s'étend librement dans la gaine cylindrique, caractérisé en ce que les moyens de fixation sont des raccordements par collage (35), que la fibre s'étend entre les points de fixation sous forme d'une hélice ou d'une quasi-hélice et qu'aux points de fixation, la direction du pas de l'hélice ou de la quasi-hélice est inversée.

2. Elément de télécommunication selon la revendication 1 dans lequel un nombre de fibres optiques hélicoïdales (34) est appliqué dans la gaine cylindrique (36), les fibres étant espacées les unes des autres d'une petite distance dans la direction tangentielle.

3. Procédé pour la réalisation d'un élément de télécommunication optique selon la revendication 1, caractérisé par l'extrusion d'une gaine cylindrique à paroi mince, et en ce qu'une ou plusieurs fibres optiques sont introduites de façon continue dans la gaine extrudée, la fibre optique ou les fibres optiques effectuant un mouvement composé qui est composé d'un mouvement dans la direction longitudinale de la gaine et un mouvement de rotation à inversion périodique de la direction de rotation, et une quantité de colle est introduite périodiquement dans la gaine, la fibre optique ou les fibres optiques étant fixée(s) sur la paroi intérieure de la gaine à l'aide de colle à des endroits où s'effectue l'inversion du mouvement de rotation.

4. Dispositif permettant la mise en oeuvre du procédé selon la revendication 3, caractérisé en ce que le dispositif comporte une tête d'extrusion 30, qui présente une ouverture en forme de fente circonférentielle 31 communiquant avec un réservoir pour le dosage d'un matériau à extruder, ainsi qu'une ouverture centrale, un arbre creux 1 qui s'étend à travers l'ouverture centrale, qui est reliée à des moyens (8) communiquant à l'arbre creux un mouvement de rotation à inversion périodique de la direction de rotation, un tube concentrique (6) dans l'arbre creux, des ouvertures d'entrées 18 et de sortie (22, 26) dans l'arbre creux et le tube pour la traversée d'une ou de plusieurs fibres optiques (3) et communiquant avec un dispositif de dosage (15) pour la répartition de la colle.

5. Dispositif selon la revendication 4, caractérisé en ce que l'extrémité de l'arbre creux (1) située du côté des ouvertures d'admission (26) présente une came cylindrique (23), dont la surface extérieure présente des rainures de guidage (24) pour les fibres optiques (3) et qui comporte en outre des canaux radiaux internes (26), qui sont liés à une extrémité au tube (6) dans l'arbre creux 1 et qui débouchent à l'autre extrémité dans des ouvertures (27) ménagées dans la surface extérieure de la came.

**Patentansprüche**

1. Optisches Fernmeldeelement, das eine optische Faser (34) innerhalb eines zylinderförmigen Mantels (36) aufweist, wobei die optische Faser periodisch an der Innenwand des zylinderförmigen Mantels fixiert ist, in dem die Faser sich zwischen den Befestigungspunkten (38) frei erstreckt, dadurch gekennzeichnet, dass die Befestigung durch Klebeverbindungen (35) erfolgt, dass die Faser sich zwischen den Befestigungspunkten in Form einer Schraubenlinie oder einer Quasi-Schraubenlinie erstreckt und dass an den Befestigungspunkten die Drallrichtung der Schraubenlinie bzw. Quasi-Schraubenlinie umgekehrt wird.

2. Optisches Fernmeldeelement nach Anspruch 1, dadurch gekennzeichnet, dass innerhalb des zylinderförmigen Mantels eine Anzahl schraubenlinienförmiger optischer Fasern (34) verwendet wird, die in tangentieller Richtung in einem geringen Abstand voneinander liegen.

3. Verfahren zur Herstellung eines optischen Fernmeldeelementes, wie dies in Anspruch 1 angegeben ist, dadurch gekennzeichnet, dass während ein dünnwandiger zylinderförmiger Mantel durch Fliesspressen gebildet wird, in den Mantel eine oder mehrere optische Fasern kontinuierlich eingeführt werden, wobei die optische(n) Faser(n) eine zusammengesetzte Bewegung erfährt (erfahren), die aus einer Bewegung in der Längsrichtung des Mantels und einer periodisch ihre Richtung ändernden Drehbewegung aufgebaut ist und dass zugleich in den Mantel periodisch eine Klebermenge eingeführt wird, wobei die optische(n) Faser(n) an den Stellen, an denen die Drehrichtung umgekehrt wird, mittels des Klebers an der Innenwand des Mantels fixiert wird bzw. werden.

4. Vorrichtung zum Durchführen des Verfahrens nach Anspruch 3, dadurch gekennzeichnet, dass die Vorrichtung einen Fliesspresskopf (30) aufweist, der mit einer umlaufenden spaltförmigen Öffnung (31) versehen ist, die mit einem Behälter zum Dosieren eines fliesspressbaren Materials in Verbindung steht, mit einer mittleren Öffnung, einer durch die mittlere Öffnung geführten Hohlachse (1), die mit Mitteln (8) verbunden ist, die der Hohlachse eine periodisch ihre Richtung ändernde Drehbewegung erteilen, einem konzetrischen Rohr (6) in der Hohlachse, sowie mit Ein- (18) und Austrittsöffnungen (22, 26) in der Hohlachse in dem Rohr zum Hindurchleiten einer oder mehrerer optischer Fasern (3) und zum Verbinden mit einer Dosiervorrichtung (15) zum Zuführen des Klebemittels.

5. Vorrichtung nach Anspruch 4, dadurch gekennzeichnet, dass, das auf der Seite der Austrittsöffnungen (26) liegende Ende der Hohlachse (1) mit einem zylinderförmigen Kamm (23) versehen ist, der auf der Aussenoberfläche mit Führungsrillen (24) für die optischen Fasern (3) versehen ist und der weiterhin mit inneren sich radial erstreckenden Kanälen (26) versehen ist, die auf dem einen Ende mit dem in der Hohlachse (1) vorgesehenen Rohr (6) verbunden sind und am anderen Ende in Öffnungen (23) münden, die in der Aussenoberfläche des Kammes vorgesehen sind.

FIG.1

FIG.2

FIG.3

FIG.4

FIG.5

FIG.6